Europäisches Patentamt

European Patent Office

Office européen des brevets

(11) Veröffentlichungsnummer: **0 489 320 A1**

# EUROPÄISCHE PATENTANMELDUNG

(21) Anmeldenummer: **91119999.0**

(22) Anmeldetag: **23.11.91**

(51) Int. Cl.5: **B60R 21/16**

(30) Priorität: **06.12.90 DE 4038910**

(43) Veröffentlichungstag der Anmeldung:
**10.06.92 Patentblatt 92/24**

(84) Benannte Vertragsstaaten:
**AT BE CH DE DK ES FR GB GR IT LI LU NL SE**

(71) Anmelder: **BASF Aktiengesellschaft
Carl-Bosch-Strasse 38
W-6700 Ludwigshafen(DE)**

(72) Erfinder: **Prissok, Frank, Dr.
Frauenstrasse 37/38
W-4400 Muenster(DE)**
Erfinder: **Zeitler, Gerhard, Dr.
Lessingstrasse 11
W-6717 Hessheim(DE)**
Erfinder: **Lehr, Gerhard
Rottstrasse 12
W-6721 Schwegenheim(DE)**

(54) **Aufblasbarer Prallschutzsack für Kraftfahrzeuge.**

(57) Aufblasbarer Prallschutzsack für Kraftfahrzeuge, Airbag genannt, bestehend aus einer Folie oder einer Folie mit Gewebebeschichtung, wobei als Folie thermoplastisches Polyurethan, Polyvinylchlorid, Polypropylen, Polyethylen, Polyamid oder Mischungen dieser Materialien verwendet wird.

Die Erfindung betrifft einen aufblasbaren Prallschutzsack für Kraftfahrzeuge, Airbag genannt, bestehend aus einer Folie oder einer Folie mit Gewebebeschichtung.

Aufblasbare Prallschutzsäcke sind in vielen Ausführungen unter der Bezeichnung Airbag bekannt. Sie werden in Kraftfahrzeugen eingebaut, um bei Zusammenstößen ein elastisches Auffangen der Fahrzeuginsassen, insbesondere des Kraftfahrzeuglenkers, zu gewährleisten. Unmittelbar nach dem Fahrzeugaufprall wird durch bekannte Einrichtungen eine Treibgasladung elektrisch gezündet. Durch die Expansion des Treibgases wird der in einem speziellen Lenkradfach verstaute Airbag entfaltet und aufgeblasen. Die Aufprallenergie des Körpers des Kraftfahrzeuglenkers wird zu einem so großen Teil durch den Airbag aufgenommen, daß eine ernsthafte Verletzungsgefahr des Fahrzeuglenkers nahezu ausgeschlossen werden kann. Der Airbag seinerseits wird durch geeignete Öffnungen oder Ventile in der Art entlüftet, daß der Airbag nach maximal 500 Millisekunden soweit zusammengefallen ist, daß das Gesichtsfeld des Fahrzeuglenkers zu einer eventuell nötigen Steuerung des Kraftfahrzeugs wieder freigegeben wird.

Die derzeit im Lenkradfach verstauten Airbags wurden durch Vernähen und/oder Vulkanisieren von mit Gummi oder gummiartigen Stoffen beschichteten Geweben überwiegend in Handarbeit hergestellt. Dies ist äußerst kostenintensiv. Trotzdem ist eine gleichbleibende Reißfestigkeit der Nähte über Jahre hinaus nicht gewährleistet.

Es stellte sich daher die Aufgabe, eine deutliche Vereinfachung der Airbagherstellung bei gleichzeitiger Verbesserung der Alterungsbeständigkeit der Nähte zu erzielen, und durch die dann kostengünstigere Herstellung und längere Lage-rungsfähigkeit der Prallschutzsäcke eine automati-sierte Produktion und somit einen Massenumsatz zu ermöglichen.

Diese Erfindung wird erfindungsgemäß dadurch gelöst, daß als Folie thermoplastisches Po-lyurethan, Polyvinylchlorid, Polypropylen, Polyeth-ylen, Polyamid oder Mischungen dieser Materialien verwendet wird.

Weitere Merkmale des erfindungsgemäßen Prallschutzsackes sind Gegenstand der Unteransprüche.

Die Erfindung mit den wesentlichen erfinderischen Merkmalen wird im folgenden näher beschrieben und teilweise mittels Zeichnungen dargestellt. Erfindungsgemäß wurden als Folienmaterial beispielsweise thermoplatisches Polyurethan, Polyvinylchlorid, Polypropylen, Polyethylen, Polyamid oder Mischungen dieser Materialien verwendet, wobei vorzugsweise thermoplastisches Polyurethan auf Ether-, Ester- oder Mischbasis zum Einsatz kommt. Die 20-1000 $\mu$m dicken Folien mit Shorehärten zwischen 60A und 55D werden je nach späterer Anwendung - mit oder ohne Gewebebeschichtung - im Blas- oder Kalanderverfahren hergestellt. Die Beschichtung der Folien mit den oben-genannten Gewebearten, vorzugsweise mit Polya-midgewebe, erfolgt mittels eines Haftvermittlers, der zwischen Folie und Gewebe in Form einer Haftvermittlerfolie oder eines Haftvermittlerpulvers aufgebracht wird.

Der Airbag wird nachfolgend im Detail anhand einer Zeichnung näher erläutert.

Figur 1 zeigt den Airbag in normalen Zustand,
Figur 2 zeigt den Airbag in aufgeblasenem Zustand.

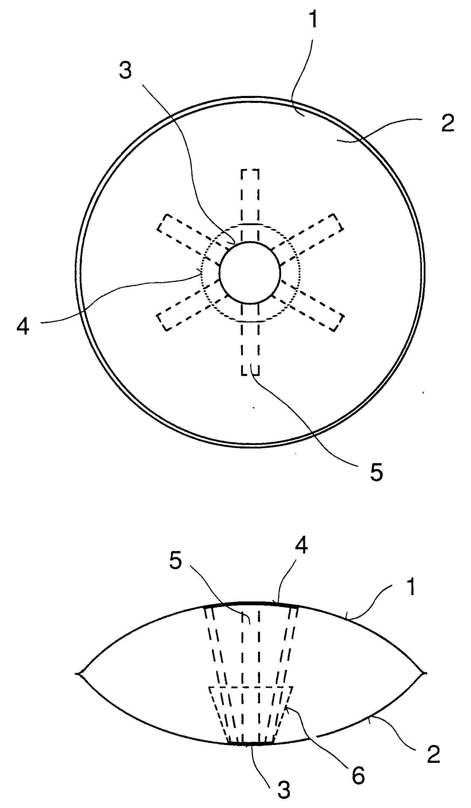

Wie aus der Zeichnung ersichtlich, besteht der Airbag aus Bagdeckel 1 - Durchmesser 70-90 cm - Bagboden 2, zunächst identisch mit dem Bagdek-kel, dem Halterring 3 zur Befestigung des Bagbodens am Gasgenerator, dem Einbauteil 4 mit mehreren Haltebändern 5 zur Stabilisierung und Formgebung im aufgeblasenen Zustand und dem Hitzeschild 6.

Die Fertigung des Airbags erfolgt wie nachstehend:

Mittels Ringelektroden wird das Einbauteil im Zentrum des Bagdeckels mit demselben verschweißt. Die Haltebänder des Einbauteils werden durch den ausgeschnittenen Bagboden gezogen, um den Haltering - der über den Ausschnitt des Bagbodens gelegt ist - gelegt, das Hitzeschild wird in den Ausschnitt des Bagbodens eingelegt, und anschließend werden Haltebänder, Haltering und Hitzeschild mit dem Bagboden am Umfang des Ausschnitts mittels einer Ringelektrode verschweißt. Letztendlich werden Bagdeckel und Bagboden mittels einer Ringelektrode zusammengeschweißt und der Airbag geschlossen. Eventuelle Entlüftungslöcher können vor dem Zusammenschweißen in die Folien eingestanzt werden.

Als Schweißmethoden können das Wärmekontakt-, das Wärmeimpuls-, das Hochfrequenzschweißen oder eine Kombination dieser Schweißtechniken angewendet werden.

Gute Ergebnisse zeigt das Hochfrequenzschweißen in Verbindung mit beheizten Elektroden und hohem Andruckgewicht. Im Standardhochfrequenzschweißverfahren wurde beispielsweise bei einer 0,3 mm TPU-(Ether)-Folie eine Schälfestigkeit von > 4,5 N/mm bei einer Dehnung von > 80 % erreicht. Für einen Standardfahrerairbag werden zur Fertigung drei Hochfrequenz-Ringelektroden benötigt.

Als Folienmaterial können beispielsweise thermoplatisches Polyurethan (TPU auf Ether-, Ester- oder Mischbasis), Polyvinylchlorid, Polypropylen, Polyethylen, Polyamid oder Mischungen dieser Thermoplaste eingesetzt werden, wobei vorzugsweise TPU zum Einsatz kommt. Die 20-1000 $\mu$m

dicken Folien mit Shorehärten zwischen 60A und 55D werden je nach späterer Anwendung - mit oder ohne Gewebebeschichtung - im Blas- oder Kalanderverfahren hergestellt.

Die Beschichtung mit den obengenannten Gewebearten, vorzugsweise mit Polyamidgewebe, kann, wenn erforderlich, mittels eines Haftvermittlers erfolgen, der zwischen Folie und Gewebe in Form einer Haftvermittlerfolie oder eines Haftvermittlerpulvers aufgebracht wird. Als Beschichtungstechniken werden u.a. die Kaschierung und Flammkaschierung mit Erfolg angewendet.

Beispiel 1

Eine TPU-Folie auf Etherbasis mit einer Dicke von 500 $\mu$m und einer Shorehärte von 85A wird für die Herstellung des Bagdeckels und -bodens verwendet. Das Einbauteil wird aus einer 50 $\mu$m dicken TPU-Folie mit Polyamidgewebebeschichtung und einer Haftvermittlerfolie hergestellt. Der Flammschutz besteht aus einer 100 $\mu$m starken TPU-Folie. Zum Verschweißen wird das HF-Verfahren mit gleichzeitig beheizten Elektroden angewendet.

Beispiel 2

Der komplette Airbag wird aus einer 100 $\mu$m starken TPU-Folie mit Polyamidgewebebeschichtung im Hochfrequenzschweißverfahren hergestellt.

Beispiel 3

Ein Airbag wird aus einer 500 $\mu$m dicken TPU-Folie für Boden und Deckel und einer 1000 $\mu$m dicken Folie für das Innenteil hergestellt. Der Flammschutzbeutel besteht ebenfalls aus reinem TPU (100 $\mu$m Folie).

Eine Kombination, bei der alle Teile aus dem gleichen Material ohne Anhaftungen bestehen, zeigt den Vorteil, daß der gesamte Airbag später einmal ohne Vorbehandlung einem Rohstoffrecycling zugeführt werden kann (bei qualitativ hochwertigen Thermoplasten wie TPU besonders interessant).

Beispiel 4

Deckel und Boden des Airbags bestehen aus PVC-Folie der Shorehärte 80A und einer Dicke von 500 $\mu$m, das Einbauteil aus einer 100 $\mu$m starken Weich-PVC-Folie mit Polyestergewebeverstärkung, der Flammschutz aus 100 $\mu$m PVC-Folie. Eine Verschweißung der Einzelteile erfolgt mittels Wärmeimpulsverfahren.

Beispiel 5

Deckel und Boden des Airbags bestehen aus einer 100 $\mu$m TPU-Folie mit einer Beschichtung aus einem elastischen Polyamidgewebe, das Einbauteil aus 50 $\mu$m starker TPU-Folie mit einem unelastischen Polyamidgewebe als Beschichtung, der Flammschutzbeutel aus 100 $\mu$m dicker, reiner TPU-Folie.

Durch geeignte Kombinationen von reiner Folie mit einer hohen Dehnung (je nach Material und Härte bis über 700 %) und einer Folie mit Gewebebeschichtung mit geringer Dehnung (je nach den verwendeten Materialien unter 50 %), können die Eigenschaften des kompletten Airbags bezüglich Energieaufnahme, Polsterwirkung, Rückhaltekraft, usw. je nach den Erfordernissen eingestellt werden.

**Patentansprüche**

1. Aufblasbarer Prallschutzsack für Kraftfahrzeuge, Airbag genannt, bestehend aus einer Folie oder einer Folie mit Gewebebeschichtung, dadurch gekennzeichnet, daß als Folie thermoplastisches Polyurethan, Polyvinylchlorid, Polypropylen, Polyethylen, Polyamid oder Mischungen dieser Materialien verwendet wird.

2. Prallschutzsack nach Anspruch 1, dadurch gekennzeichnet, daß als Gewebebeschichtung ein Material mit mehr als 50 N/mm$^2$, beispielsweise Polyamid, Polyester, Polyaramid, Glasfaser, Kohlefaser, Naturfaser oder eine Mischung aus diesen Materialien verwendet wird.

3. Prallschutzsack nach den Ansprüchen 1 und 2, dadurch gekennzeichnet, daß der Hitzeschild aus demselben Material wie der Prallschutzsack gefertigt wird.

4. Prallschutzsack nach den Ansprüchen 1 bis 3, dadurch gekennzeichnet, daß im aufgeblasenen Zustand durch Hältebänder die Form des Prallschutzsackes vorgegeben wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 363 490 (ASAHI KASEI K.K.K.) <br> * Abbildungen 1-5 * <br> * Zusammenfassung * <br> * Seite 5, Zeile 33 - Seite 12, Zeile 24 * <br> * Seite 12, Zeile 28 - Seite 13, Zeile 2 * <br> * Seite 14, Zeile 17 - Zeile 25 * <br> --- | 1,2,4 | B60R21/16 |
| X | DE-U-8 714 595 (BLOCH KLAUS) <br> * Abbildungen 1,2 * <br> * Seite 1 - Seite 4 * <br> --- | 1,3,4 | |
| X | PATENT ABSTRACTS OF JAPAN <br> vol. 14, no. 331 (M-999)(4274) 17. Juli 1990 <br> & JP-A-2 114 035 ( TORAY IND INC ) 26. April 1990 <br> * Zusammenfassung * <br> --- | 1,2 | |
| A | US-A-4 830 401 (HONDA) <br> * Abbildungen 1-3 * <br> * Zusammenfassung * <br> * Spalte 2, Zeile 12 - Zeile 27 * <br> * Spalte 3, Zeile 20 - Spalte 5, Zeile 19 * <br> ----- | 1-4 | RECHERCHIERTE SACHGEBIETE (Int. Cl.5 ) <br><br> B60R |

Der vorliegende Recherchenbericht wurde für alle Patentansprüche erstellt

| Recherchenort | Abschlußdatum der Recherche | Prüfer |
|---|---|---|
| DEN HAAG | 31 MAERZ 1992 | D'SYLVA C. |

EPO FORM 1503 03.82 (P0403)